# EUROPEAN PATENT APPLICATION

(11) **EP 3 067 153 A1**
(43) Date of publication of application: **14.09.2016**
(21) Application number: 16157343.1
(22) Date of filing: 25.02.2016
(51) Int. Cl.: B23P 15/04, F01D 5/14, F01D 5/18, F04D 29/32

(54) **MANUFACTURE OF A HOLLOW AEROFOIL**

(30) Priority: 13.03.2015 GB 201504276
(71) Applicant: Rolls-Royce plc, London SW1E 6AT (GB)
(72) Inventor: Crowston, Ian, Derby, Derbyshire DE24 8BJ (GB)
(74) Representative: Rolls-Royce plc

(57) **Abstract**

A method of manufacturing a hollow aerofoil component (100) for a gas turbine engine (10) comprises using a capping panel (200) to cover a pocket in a pocketed aerofoil body (300). The pocketed aerofoil body has a ledge (400) of substantially constant thickness that extends around its perimeter, and to which the capping panel is joined (e.g. welded) during manufacture. This ensures that the geometry of the join is consistent around the perimeter, meaning that the resulting join has improved properties, for example in terms of residual stress and/or distortion.

## Description

The present disclosure relates to a hollow aerofoil.

Aerofoil shaped components are used throughout gas turbine engines. For example, aerofoil shaped stator vanes and rotor blades are used to guide gas through the engine, for example both in the turbine and the compressor, including the fan and associated guide vanes.

Weight reduction is an important consideration in gas turbine engines, particularly, although not exclusively, for gas turbine engines used to power aircraft. Generally, the lower the weight of the component the better the performance of the aircraft to which it is fitted, for example in terms of fuel consumption. To this end, it is known to use hollow aerofoils, e.g. rotor blades and/or stator vanes, in some stages of gas turbine engines.

One method of producing a hollow aerofoil involves forming the structure using a skin. This involves creating an internal cavity (which may be filled with another, lighter weight, material) using hot creep or super plastic forming processes. Such processes may generate aerofoils with some advantageous properties, such as thin skin thickness and tight dimensional tolerance, but they involve significant material wastage. This material wastage makes these processes expensive, due at least to high material cost for a given size of hollow aerofoil component.

An alternative method or producing hollow aerofoil components involves attaching a plate to an aerofoil structure out of which a pocket has been machined. The plate is placed into the pocket and attached (for example welded or bonded) therein to produce a hollow aerofoil component.

An advantage of producing the hollow aerofoil by using a plate to cover a pocket in an aerofoil structure is that there is less material wastage than using a skin to produce the hollow aerofoil. However, the dimensional tolerances are not so accurate. This may be because distortion is introduced in the process of attaching the plate to the pocketed aerofoil. Additionally, tolerance errors may "stack-up" in the process used to produce the pocketed aerofoil, the process used to produce the plate, and the process/feature used to locate the plate into position in the pocket, which typically involve placing the plate onto a supporting ledge at the of the pocket.

An alternative to placing the plate onto a supporting ledge at the top of a pocket is to shape the plate such that it bends upwardly away from the pocket at its edges so as to sit on the surface of the aerofoil body that surrounds the pocket.

In both such arrangements for attaching a panel to a pocketed aerofoil body, the weld process may lead to distortion. This may be a result of the complex geometry of the component.

The lack of dimensional accuracy resulting from such distortion means that the plate generally has to be manufactured to be thicker than would otherwise be required. For example, the extra thickness may be required in order to ensure that there is enough material to be machined back to produce the desired aerofoil shape after it has been fixed into the pocket. Without the extra thickness, the dimensional variation resulting from tolerance "stack-up" and/or distortion may result in components that are outside acceptable tolerance ranges.

However, this extra thickness means both that the component is heavier than it would otherwise need to be, and also that there is more material wastage.

It is therefore desirable to manufacture hollow aerofoil components by using a plate to cover a pocket (so as to take advantage of the generally lower material wastage), but with improved properties such as improved dimensional tolerance and lower weight.

According to an aspect there is provided a pocketed aerofoil body for use in the manufacture of a hollow aerofoil comprising an open pocket formed in a surrounding hollowed surface, the edge of the hollowed surface being defined by a pocket contour. The pocketed aerofoil body further comprises a ledge that extends from the pocket contour. The ledge may be said to extend from the pocket contour into the pocket. The ledge perimeter is defined by a ledge contour. The ledge has a uniform thickness at its perimeter so as to extend a uniform distance into the pocket from the ledge contour.

According to an aspect there is provided a method of manufacturing a pocketed aerofoil body for use in the manufacture of a hollow aerofoil. The method comprises providing a reference pocketed aerofoil body having an open pocket formed in a surrounding hollowed surface. A pocket contour may define the edge of the surrounding hollowed surface. The method comprises forming a ledge at the perimeter edge of the hollowed surface, the ledge perimeter being defined by a ledge contour. The ledge has a uniform thickness at its perimeter so as to extend a uniform distance into the pocket from the ledge contour.

The ledge contour may be said to be inside the pocket contour. The ledge contour may be said to be shorter than the pocket contour.

Providing a pocketed aerofoil body with a ledge, as described and/or claimed herein, may facilitate a more uniform weld thickness between the pocketed aerofoil body and a capping panel used to cover the pocket. This may result in advantages in any one or more of differential thermal expansion around the weld during the weld process, control of grain structure at and around the weld, residual stress at and around the weld, distortion at and around the weld, and/or ease and/or accuracy of weld inspection, for example post-weld inspection (for example using x-ray inspection). This may mean that a capping panel used to cover the pocket can be made thinner than with conventional methods. Advantages may be said to result from the heat sink being balanced (or at least substantially balanced, or more balanced than previous arrangements) either side of the weld.

A thinner capping panel may result in any one or more of reduced weight, reduced material costs and/or a reduction in the amount of any machining that is required after joining to produce the desired aerofoil surface.

Furthermore, using a thinner panel means that, where welding is used in the joining process, the amount of input power can be reduced. In turn, this means that the amount of distortion produced in the welding process may be reduced still further, resulting in a more accurate profile post-welding that may require less machining to produce the finished aerofoil surface.

The step of providing a reference pocketed aerofoil body may comprise machining the pocket into an aerofoil blank in order to produce the pocketed aerofoil body cavity.

The surrounding hollowed surface in which the pocket is formed may be said to be part of a suction surface or a pressure surface. The pocket may be said to be formed in the suction surface or pressure surface. The thickness of the ledge may be said to be in a direction that is normal to the local surrounding surface and/or to be in a direction that extends into the pocket in a direction that is from one of the pressure surface or suction surface to the other of the pressure surface or suction surface.

The ledge may be said to have an upper surface that is an extension of the surrounding hollowed surface. Such an upper surface of the ledge may be said to be continuous and/or contiguous with the surrounding hollowed surface. The ledge may be said to have a lower surface that faces generally into the pocket. The lower surface may be said to face generally away from the upper surface of the ledge and/or generally away from the local surrounding hollowed surface. The lower surface may be generally parallel to the upper surface and/or to the local surrounding hollowed surface. The lower surface and the upper surface of the ledge may be said to be separated by the thickness of the ledge.

The ledge may have a uniform shape around the pocket. The cross section of the ledge may be uniform (including substantially uniform) around the pocket. Such a cross section may be taken in a plane that is perpendicular to the local direction of the ledge perimeter.

The ledge may be formed in any suitable manner. For example, the step of forming the ledge may comprise forming a recess in the open pocket that extends around the pocket at a predetermined distance below the hollowed surface. The pocketed aerofoil body may comprise a recess formed inside the open pocket so as to form the ledge. The recess may extend around the pocket at a predetermined distance below the hollowed surface. The predetermined distance may be constant around the pocket.

Where the ledge is formed by a recess, the recess may be formed in any suitable manner, for example by machining the recess. This may require the use of a cutting tool that is able to cut a recess into a side (or perimeter) surface of the pocket that extends around the pocket.

The pocketed aerofoil body may comprise a support surface on which a capping panel may be placed during manufacture. The support surface may support the capping panel before and during welding.

Any suitable support surface may be used. For example, a support surface may be formed by the surrounding hollowed surface and/or by the ledge, for example by an upper surface of the ledge (that is, the surface of the ledge that faces away from the pocket). Such a support surface may be referred to as a location surface, and/or may be a chamfer, or angle surface, that extends between an edge surface and an upper surface of the ledge. Such a support surface may engage with a corresponding surface (which may be referred to as a locating surface) of the capping panel.

The pocketed aerofoil body may comprise a dedicated support shelf that extends from the ledge and which supports a capping panel before and during welding. In that case, the support surface may be formed by an upper surface of the support shelf. The upper surface of the support shelf may be generally parallel to the upper surface of the ledge and/or to the upper surface of the surrounding hollowed surface. The support shelf may be thinner than the ledge. The lower surface of the support shelf may be continuous and/or contiguous with the lower surface of the ledge. The support shelf may be formed by a recess in a feature that would otherwise form a ledge. Indeed, the support shelf may be said to form a part of a ledge in some arrangements.

A method of manufacturing a pocketed aerofoil body may comprise machining the surrounding hollowed surface so as to define the pocket contour and to form a support shelf that extends from the ledge.

According to an aspect, there is provided a method of manufacturing a hollow aerofoil. The method comprises providing (for example manufacturing (for example as described and/or claimed herein) and/or supplying and/or receiving) a pocketed aerofoil body as described and/or claimed herein. The method comprises locating a capping panel adjacent to the ledge of the pocketed aerofoil body, with an inner surface of the capping panel facing into the pocket and an outer surface facing away from the pocket. The method comprises joining the capping panel to the ledge of the pocketed aerofoil body so as to cover the pocket with the capping panel, thereby forming a cavity.

The capping panel may have a perimeter surface that extends from the inner surface, for example towards the outer surface. In some arrangements, the perimeter surface may connect the inner surface and the outer surface of the capping panel. The perimeter surface may be said to extend in a thickness direction of the capping panel. The perimeter surface may extend substantially perpendicularly from the inner surface and/or the outer surface.

According to a method of manufacturing a hollow aerofoil, the step of locating the capping panel may comprise locating its perimeter surface adjacent an edge surface of the ledge. The edge surface of the ledge may be defined as a surface that extends into the pocket from the ledge contour. Additionally or alternatively, the edge surface may be defined as the surface that extends from an upper surface of the ledge in the direction of the lower surface, for example between the upper surface and the lower surface of the ledge in some arrangements. The step of joining the capping panel to the ledge may comprise joining the perimeter surface of the capping panel and the edge surface of the ledge together. The edge surface of the ledge and the perimeter surface of the capping panel may be substantially the same size and/or shape. For example the edge surface of the ledge and the perimeter surface of the capping panel may be in contact with each other when the capping panel and the pocketed aerofoil body are brought together.

Any suitable process may be used for the joining step. For example, the joining step may comprise laser welding or electron beam welding. Additionally or alternatively, the joining step may comprise any one or more of brazing, fusion welding, stir welding, adhesive joining/welding, TIG welding, MIG welding, and any form of beam welding.

After the joining step, the outer surface of the capping panel may be continuous with the hollowed surface of the pocketed aerofoil body. The capping panel, along with the hollowed surface, may form part of the gas-washed surface of the manufactured hollow aerofoil, for example a part of the suction or the pressure surface. A finishing step (for example machining) may be used after the joining step to produce the finished gas-washed surface.

Where the term "hollow aerofoil" or similar is used herein, this may include (by way of example) aerofoils having an empty cavity or aerofoils having a cavity that is filled (including substantially filled), for example with a material that is less dense than the material of the capping panel and the pocketed aerofoil body. Accordingly, a method of manufacturing a hollow aerofoil may comprise filling the cavity with a material that is less dense than the material of the capping panel and pocketed aerofoil body. Such a material may be, for example, a damping material.

According to an aspect, there is provided a hollow aerofoil manufactured using the methods and/or components (for example including the pocketed aerofoil body) described and/or claimed herein. The hollow aerofoil may be, for example, a stator vane or a rotor blade of a gas turbine engine, for example an outlet guide vane that extends across a bypass duct of a turbofan gas turbine engine.

According to an aspect, there is provided a hollow aerofoil having a chord, span and thickness, as well as a suction surface and a pressure surface separated by a thickness. The hollow aerofoil has a cavity formed between the suction surface and the pressure surface. The cavity has a recess formed therein that extends around the cavity at a constant distance below at least one of the pressure surface and suction surface so as to define a constant material thickness between the recess and the respective pressure or suction surface directly above it.

The cavity may be said to have a perimeter surface that defines the extent of the cavity in the chordwise and spanwise directions of the aerofoil and a depth that extends substantially in the thickness direction. The recess may be formed in such a perimeter surface.

According to an aspect, there is provided a gas turbine engine comprising an aerofoil (or aerofoil component) as described and/or claimed herein and/or manufactured according to any of the methods described and/or claimed herein.

Arrangements will now be described by way of example only, with reference to the accompanying drawings, in which:
Figure 1 is a sectional side view of a gas turbine engine;
Figure 2A is a schematic showing a hollow aerofoil in accordance with the disclosure;
Figure 2B is a section through the line labelled 2B in Figure 2A;
Figure 2C is a section through the line labelled 2C in Figure 2A;
Figure 3 is a schematic cross-section through a first example of a capping panel and a pocketed aerofoil body at a first location before joining;
Figure 4 is a schematic cross-section through the first example of a capping panel and a pocketed aerofoil body at a second location before joining;
Figure 5 is a schematic cross-section through a second example of a capping panel and a pocketed aerofoil body at a first location before joining;
Figure 6 is a schematic cross-section through the second example of a capping panel and a pocketed aerofoil body at a second location before joining;
Figure 7 is a schematic cross-section through a third example of a capping panel and a pocketed aerofoil body at a first location before joining; and
Figure 8 is a schematic cross-section showing a joined capping panel and pocketed aerofoil body.

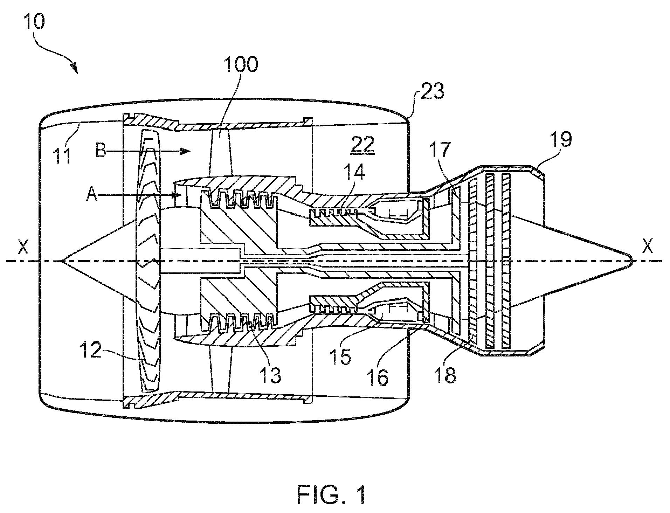

With reference to Figure 1, a ducted fan gas turbine engine generally indicated at 10 has a principal and rotational axis X-X. The direction X-X may be referred to as the axial direction of the engine. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B (which may be referred to as a bypass flow B) which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts. Other gas turbine engines to which the present disclosure may be applied may have different configurations, for example having two shafts, three shafts and/or a gearbox through which the fan 12 is linked to a turbine.

As the air passes through the gas turbine engine 10 it is heated to high temperatures. In particular, the first airflow A reaches high temperatures as it passes through the core of the engine. Typically, particularly high temperatures may be reached at the exit of the combustion equipment 15, and as the air subsequently passes through the high, intermediate and low-pressure turbines 16, 17, 18.

The gas turbine engine 10 comprises outlet guide vanes (OGVs) 100 extending across the bypass duct 22, which therefore sit in the bypass flow B. Each OGV 100 takes the form of a large stator vane, and thus may be referred to as an aerofoil or aerofoil component 100. A plurality of OGVs 100 is typically provided as an annular array in the bypass duct 22.

Because each OGV 100 is an especially large aerofoil component, it is particularly advantageous to reduce its weight. Thus, the OGV 100 in the gas turbine engine 10 is hollow.

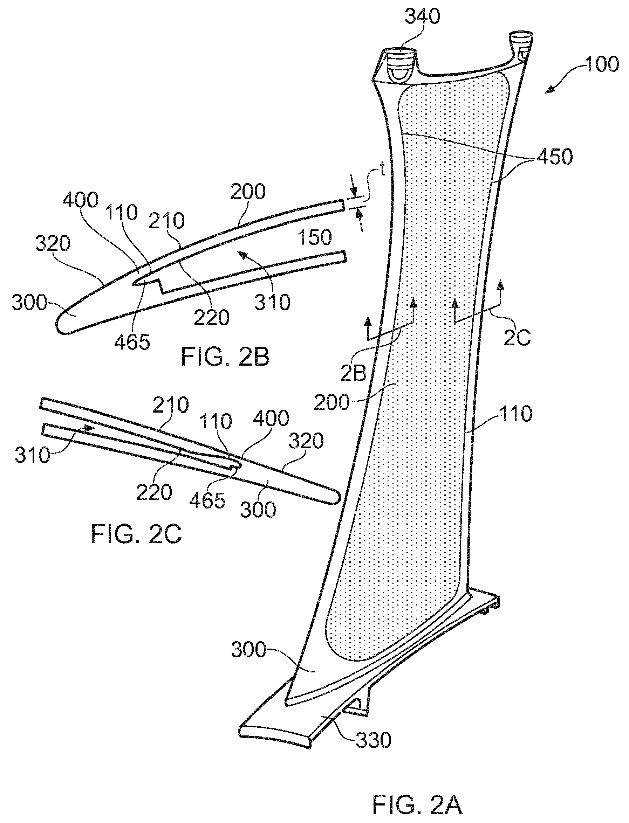

Figures 2A-2C (collectively referred to as Figure 2) shows a schematic of a hollow OGV 100 according to an example of the present disclosure. As illustrated in Figure 2, the hollow OGV 100 is manufactured by joining a capping panel 200 to a pocketed aerofoil body 300. In the Figure 2 example, the capping panel 200 has been joined to the pocketed aerofoil body 300 by welding along a weld line 110.

Figure 2 shows the capping panel 200 and the pocketed aerofoil body 300 welded together to form a hollow OGV 100 having a cavity 150 (which may or may not be filled). However, it will be appreciated that prior to joining, the capping panel 200 and the pocketed aerofoil body 300 are separate entities. The capping panel 200 and the pocketed aerofoil body 300 may be any suitable material, for example metallic and/or composite, and may be the same or different materials.

The pocketed aerofoil body 300 comprises a pocket 310, which may be described as an open pocket 310, formed in a surrounding hollowed surface 320. For example, the pocket 310 may be machined into an original surface of an aerofoil blank, leaving a portion of the original surface of the aerofoil blank, referred to as the surrounding hollowed surface 320, surrounding the pocket 310. The original aerofoil blank may be, for example, a close-to-size forging. The surrounding hollowed surface 320 may be a part of the gas washed surface of the finished OGV 100, for example a part of the pressure surface or the suction surface, as in the examples shown in the Figures. The surrounding hollowed surface 320 may require finishing to become a part of the gas washed surface of the finished OGV 100.

In the example shown in Figure 2, the pocketed aerofoil body 300 comprises an inner attachment 330 (which may be a platform) and an outer attachment 340, which may be used to attach the finished OGV 100 to the rest of the gas turbine engine. However, it will be appreciated that some pocketed aerofoil bodies 300 may not include one or both of the inner attachment 330 and outer attachment 340. For example, the inner and/or outer attachments 330/340 may be separate features that may be attached to the hollow aerofoil 100 after the capping panel 200 and the pocketed aerofoil body 300 have been joined together.

The capping panel 200 comprises an inner surface 220 that faces into the pocket 310, and an outer surface 210 that faces in the opposite direction to the inner surface 220, i.e. the outer surface 220 faces away from the pocket 310. The capping panel 200 may be said to be a thin body, having an inner surface 220 separated from an outer surface 210 by a thickness t. The outer surface 210 may form a part of the gas washed surface of the finished OGV 100, for example after a finishing step. For example, the outer surface 210 may form a part of the pressure surface, or the suction surface as in the example shown in the Figures. After joining the pocketed aerofoil body 300 and the capping panel 200 (and optionally applying a finished step to the resulting hollow aerofoil component), the outer surface 210 may be a continuation of the surrounding hollowed surface 320 of the pocketed aerofoil body 300.

The pocketed aerofoil body 300 used to form the aerofoil 100 has a ledge 400 that extends into the pocket 150. This ledge 400 extends around the perimeter of the pocketed aerofoil body 300. Accordingly, the ledge 400 is shown in both the leading edge cross-section shown in Figure 2B and the trailing edge cross-section shown in Figure 2C. Of course, the ledge 400 may not be visible in the finished aerofoil 100 (i.e. after the capping panel 200 and the pocketed aerofoil body 300 have been joined), but is indicated in both Figure 2B and 2C by the presence of the weld line 110.

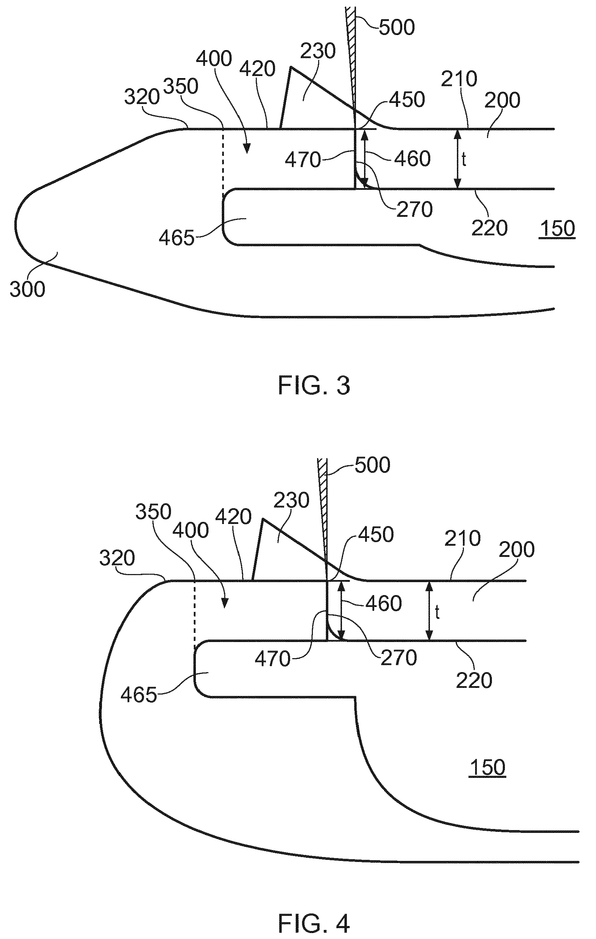

Figures 3 and 4 respectively show enlarged views of a trailing edge portion and a leading edge portion of the same pocketed aerofoil body 300 and the capping panel 200. The ledge 400 extends into the pocket 150 of the pocketed aerofoil body from a pocket contour 350. The pocket contour 350 may be said to be an imaginary line that extends around the pocketed aerofoil body 300 to delimit the ledge 400 (which is a part of the pocketed aerofoil body 300) from the rest of the pocketed aerofoil body 300. Accordingly, the ledge 400 is the part of the pocketed aerofoil body 300 that extends into the pocket 150 from the pocket contour 350 to a ledge contour 450 that defines the perimeter of the ledge 400.

The thickness 460 of the ledge 400 is constant around the ledge 400, at least at the ledge contour 450. Accordingly, the dimension labelled 460 is substantially the same in both Figure 3 and Figure 4. Indeed, the cross-section of the ledge 400 may be substantially the same around its full extent (i.e. around the full loop defined by the ledge 400).

The ledge 400 may be formed by a recess 465 that extends around the pocket 150, as in the example of Figures 3 and 4. The recess 465 may be formed by machining into a perimeter edge surface of the pocket 150. In the example of Figures 3 and 4, the recess 465 is formed at a constant distance below the upper surface 420 of the ledge 400, thereby ensuring that the thickness 460 of the ledge 400 is constant around its perimeter. In this regard, the upper surface 420 of the ledge 400 may be an extension of (and may be said to form part of) the surrounding hollowed surface 320.

The upper surface 420 (which may be referred to as the outwardly facing surface 420) of the ledge 400 may form a support surface 420 for the capping panel 200 prior to joining, as in the example of Figures 3 and 4. The capping panel 200 is located and/or supported by the support surface 420 prior to joining, for example using an energy beam (such as a laser beam or an electron beam) 500.

The joining of the capping panel 200 and the pocketed aerofoil body 300 occurs between an edge surface (which may be referred to as a joining surface) 470 of the ledge 400 and a perimeter surface (which may be referred to as an abutting surface) 270 of the capping panel 200. Because of the presence of the ledge 400, the geometry of the pocketed aerofoil body 300 in the joining region is substantially the same around the full perimeter of the joint. The geometry of the capping panel 200 may also be substantially the same around the full perimeter of the joint. The thickness and/or abutting distance of the edge surface 470 of the ledge 400 and the perimeter surface 270 of the of the capping panel 200 may be substantially constant around the full extent (for example the full perimeter) of the surfaces 270, 470.

The constant (or unvarying) geometry of the capping panel 200 and the pocketed aerofoil body 300 around the joining region leads to a reliable, high quality joint. This may be due to, for example, more consistent thermal management around the joint. Having a substantially constant geometry around the joint may act as a substantially constant heat sink during the joining process, leading to little or no distortion and/or residual stress after the joining.

The thickness 460 of the ledge 400 (or at least the edge surface 470 thereof) may be substantially the same as the thickness t of the capping panel 200, as in the illustrated examples. This may lead to a particularly balanced heat input into the capping panel 200 and the ledge 400 during the joining, which may provide still further advantages in terms of, for example weld repeatability, grain structure (which may be more consistent across the weld), lower distortion and improved ease and quality of inspection.

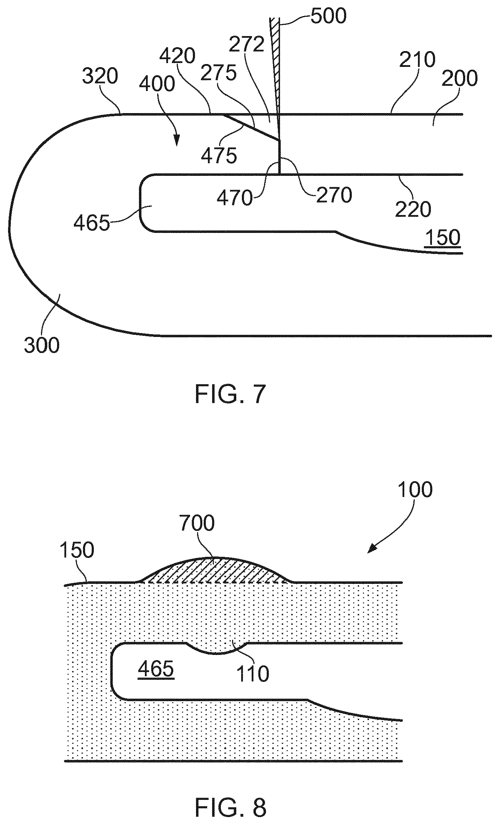

In the arrangement shown in Figures 3 and 4, the capping panel has a support portion 230. The support portion 230 rests on the support surface 420 before and during joining. After joining, at least a part of the support portion 230 may remain as a ridge extending around the joint (see Figure 7, for example). Such a ridge may be removed in a finishing process, for example by machining. Such a support portion 230 may be provided, for example, as a continuous support around the perimeter of the capping panel, or as one or more discrete support portions (or tables) 230 at suitable positions around the perimeter. Such a support portion 230 may be formed in any suitable manner, for example by forming and/or machining.

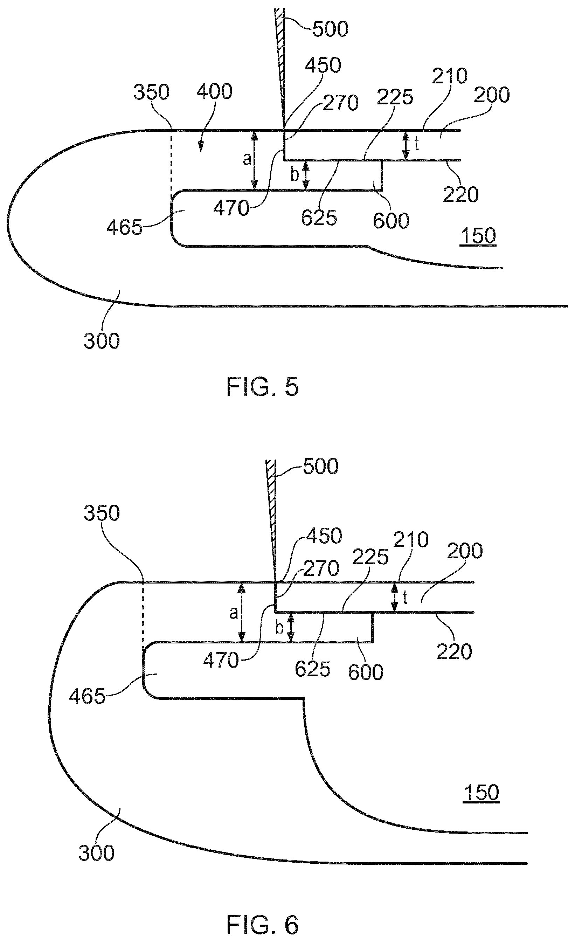

Figures 5 and 6 respectively show enlarged views of a trailing edge portion and a leading edge portion of an alternative pocketed aerofoil body 300 and the capping panel 200 to that shown in Figures 3 and 4. Like reference numerals in Figure 3 to 6 refer to the same or similar features.

In contrast to Figures 3 and 4, the arrangement of Figures 5 and 6 has a support shelf 600 extending from the ledge 400. The support shelf 600 may be said to extend into the pocket 150 from the ledge 400.

As with the arrangement of Figures 3 and 4, the pocketed aerofoil body 300 and capping panel 200 of Figures 5 and 6 respectively have an edge surface 470 and a perimeter surface 270. Once again, in order to join the capping panel 200 and pocketed aerofoil body 300 together, the edge surface 470 and the perimeter surface 270 are joined together, for example using an energy beam (such as a laser beam or an electron beam) 500.

In the example of Figures 5 and 6, the capping panel 200 is supported on the support shelf 600. For example, the capping panel 200 may be supported on the supported shelf 600 prior to and during at least a part of the process of joining the capping panel 200 to the pocketed aerofoil body 300. A portion 225 of the lower surface 220 of the capping panel 200 may be supported on an upper surface (which may be referred to as a support surface) 625 of the support shelf 600.

As with other examples, the geometry of the capping panel 200 and pocketed aerofoil body 300 around the joining region 270, 470 is substantially the same, or constant, around the perimeter of the join. For example, the thickness 'a' of the ledge 400 and/or the thickness 'b' of the support shelf 600 may be substantially constant around the perimeter of the join. This may provide at least those advantages discussed elsewhere herein, for example in terms of better grain structure, and/or less distortion and/or residual stress, and/or more consistent joint around the perimeter, and/or improved inspection (for example x-ray) time and/or quality.

Figure 7 shows a further example of a pocketed aerofoil body 300 and capping panel 200. Like reference numerals in Figures 3 to 7 refer to like features.

In the Figure 7 example, the capping panel 200 comprises a locating feature 272. In the Figure 7 example, the locating feature 272 comprises a locating surface 275. The locating surface 275 is supported by a location surface 475 (which may be an example of a support surface) formed by the ledge 400. The location surface 475 may be described as a chamfer, or angled surface, that extends between the edge surface 470 and the upper surface 420 of the ledge 400. When the capping panel 200 is placed into position, it may be supported by engagement of the locating surface 275 on the location surface 475, at least prior to the joining operation. In other respects, the example shown in Figure 7 may be substantially the same as the examples shown and described elsewhere herein, and accordingly may enjoy the same advantages.

Figure 8 shows a cross-section through a joint portion of a hollow aerofoil 100 after the capping panel 200 and the pocketed aerofoil body 300 have been joined together, for example by any form of welding. As shown in Figure 8, the resulting hollow aerofoil 100 has the recess 465 at a distance below an aerodynamic surface 150 of the hollow aerofoil 100. The recess 465 is at a substantially constant distance below the aerodynamic surface 150 around the perimeter of the hollow aerofoil (for example around the weld perimeter 110). This may be at least in part because of the presence of the constant-thickness ledge 400 extending around the pocketed aerofoil body 300 used to manufacture the hollow aerofoil 100, as described above by way of example. The joining process may result in the presence of a weld bead 700 being formed, as in the example of Figure 8. Such a weld bead may be removed, for example by machining, in order to produce the finished hollow aerofoil 100. The hollow aerofoil may or may not be at least partially filled with a filler material.

Although the invention has largely been described herein in relation to an OGV 100, it will be appreciated that it could be applied to any aerofoil or aerofoil component, such as any rotor blade or stator vane, for example for use in a turbine, compressor, or other aerofoil-shaped component of a gas turbine engine.

It will be appreciated that many designs and/or arrangements of features, such as capping panel, pocketed aerofoil body or fixture, other than those shown in and described in relation to Figures 1 to 8 and not explicitly described herein fall within the scope of the invention. Furthermore, any feature described and/or claimed herein may combined with any other compatible feature described in relation to the same or another embodiment.

## Claims

1. A pocketed aerofoil body (300) for use in the manufacture of a hollow aerofoil (100) comprising:
an open pocket (150) formed in a surrounding hollowed surface (320), the edge (350) of the hollowed surface being defined by a pocket contour; and
a ledge (400) that extends from the pocket contour, the ledge perimeter being defined by a ledge contour (450), the ledge having a uniform thickness (460) at its perimeter so as to extend a uniform distance into the pocket from the ledge contour.

2. A pocketed aerofoil body according to claim 1, wherein the ledge has a uniform shape around the pocket.

3. A pocketed aerofoil body according to claim 1 or claim 2, comprising a recess (465) formed inside the open pocket, the recess extending around the pocket at a predetermined distance (460) below the hollowed surface so as to form the ledge.

4. A pocketed aerofoil body according to any one of the preceding claims, further comprising a support surface (420) on which a capping panel may be placed during manufacture.

5. A pocketed aerofoil body according to claim 4, wherein the support surface is formed by the surrounding hollowed surface (320) and/or by the ledge (400).

6. A pocketed aerofoil body according to claim 4, wherein the support surface is formed by an upper surface (625) of a support shelf (600) that extends from the ledge, the upper surface facing out of the pocket.

7. A method of manufacturing pocketed aerofoil body (300) for use in the manufacture of a hollow aerofoil comprising:
providing a reference pocketed aerofoil body having an open pocket (150) formed in a surrounding hollowed surface; and
forming a ledge (400) at the perimeter edge of the hollowed surface, the ledge perimeter being defined by a ledge contour (450), the ledge having a uniform thickness (460, a) at its perimeter so as to extend a uniform distance into the pocket from the ledge contour.

8. A method of manufacturing a pocketed aerofoil body according to claim 7, wherein the step of forming the ledge comprises forming a recess (465) in the open pocket that extends around the pocket at a predetermined distance below the hollowed surface.

9. A method of manufacturing a pocketed aerofoil body according to claim 8, wherein the step of forming a recess comprises machining the recess.

10. A method of manufacturing a pocketed aerofoil body according to any one of claims 7 to 9, further comprising machining the surrounding hollowed surface so as to define the ledge contour (450) and to form a support shelf (600) that extends from the ledge, the support shelf having an upper surface (625) that is suitable for supporting a capping panel (200) used to cover the open pocket during manufacture of the hollow aerofoil.

11. A method of manufacturing a hollow aerofoil (100) comprising:
providing a pocketed aerofoil body (300) according to any one of claims 1 to 6;
locating a capping panel (200) adjacent to the ledge (400) of the pocketed aerofoil body, with an inner surface (220) of the capping panel facing into the pocket and an outer surface (210) facing away from the pocket; and
joining the capping panel to the ledge of the pocketed aerofoil body so as to cover the pocket with the capping panel, thereby forming a cavity.

12. A method of manufacturing a hollow aerofoil according to claim 11, wherein:
the capping panel has a perimeter surface (270) that extends from the inner surface (220) towards the outer surface (210); and
the step of locating the capping panel comprises locating its perimeter surface adjacent an edge surface (470) of the ledge, the edge surface being a surface that extends into the pocket from the ledge contour; and
the step of joining the capping panel to the ledge comprises joining the perimeter surface of the capping panel and the edge surface of the ledge together.

13. A method of manufacturing a hollow aerofoil according to claim 11 or claim 12, wherein the joining step comprises laser welding or electron beam welding.

14. A method of manufacturing a hollow aerofoil according to any one of claims 11 to 13, further comprising filling the cavity with a material that is less dense than the material of the capping panel and pocketed aerofoil body.

15. A hollow aerofoil (100) having a chord, span and thickness comprising:
a suction surface and a pressure surface separated by a thickness; and
a cavity (310) formed between the suction surface and the pressure surface, wherein
the cavity has a recess (465) formed therein that extends around the cavity at a constant distance below at least one of the pressure surface and suction surface so as to define a constant material thickness between the recess and the respective pressure or suction surface directly above it.
